(19)

Europäisches
Patentamt
European
Patent Office
Office européen
des brevets

(11) **EP 3 195 488 B1**

(12) **EUROPÄISCHE PATENTSCHRIFT**

(45) Veröffentlichungstag und Bekanntmachung des
Hinweises auf die Patenterteilung:
**04.07.2018  Patentblatt 2018/27**

(21) Anmeldenummer: **15763494.0**

(22) Anmeldetag: **10.09.2015**

(51) Int Cl.:
*H04B 3/46* (2015.01)     *H04B 10/07* (2013.01)
*H04B 17/00* (2015.01)

(86) Internationale Anmeldenummer:
**PCT/EP2015/001826**

(87) Internationale Veröffentlichungsnummer:
**WO 2016/041627 (24.03.2016 Gazette 2016/12)**

(54) **VERFAHREN ZUM MESSEN VON PASSIVER INTERMODULATION UND MESSGERÄT**

METHOD FOR MEASURING PASSIVE INTERMODULATION AND MEASURING DEVICE

PROCÉDÉ DE MESURE D'INTERMODULATION PASSIVE ET DISPOSITIF DE MESURE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **19.09.2014  DE 102014013968**

(43) Veröffentlichungstag der Anmeldung:
**26.07.2017  Patentblatt 2017/30**

(73) Patentinhaber: **Rosenberger
Hochfrequenztechnik GmbH & Co. KG
84526 Fridolfing (DE)**

(72) Erfinder:
• **ENTSFELLNER, Christian
83413 Fridolfing (DE)**
• **KAINDL, Benjamin
83413 Fridolfing (DE)**
• **SCHWAB, Martin
82538 Gelting (DE)**

(74) Vertreter: **Zeitler Volpert Kandlbinder
Patent- und Rechtsanwälte Partnerschaft mbB
Herrnstrasse 44
80539 München (DE)**

(56) Entgegenhaltungen:
**DE-A1-102010 015 102     US-A- 6 144 692**

**Beschreibung**

Die vorliegende Erfindung betrifft allgemein Messsysteme für hochfrequente Kommunikationssysteme und speziell Messvorrichtungen zur Messung von passiver Intermodulation.

Insbesondere betrifft die vorliegende Erfindung ein Verfahren zum Messen von in einem Signalübertragungspfad erzeugter Intermodulation, bei dem ein erstes HF-Signal $u_1(t)$ mit einem vorbestimmten Frequenzverlauf und ein zweites HF-Signals $u_2(t)$ mit einem vorbestimmten Frequenzverlauf erzeugt werden und das erste HF-Signals $u_1(t)$ und das zweite HF-Signal $u_2(t)$ in den Signalübertragungspfad eingeleitet werden, wobei in dem Signalübertragungspfad aus dem ersten HF-Signal $u_1(t)$ und dem zweiten HF-Signal $u_2(t)$ ein Intermodulationsprodukte aufweisendes Intermodulationssignal erzeugt wird. Ein solches Intermodulationssignal kann bspw. Rückschlüsse über die Lage von fehlerhaften Stellen im Signalübertragungspfad enthalten und kann deshalb zum Orten von Fehlstellen verwendet werden. Ferner betrifft die Erfindung ein Messgerät zum Ausführen eines solchen Verfahrens.

Beschreibung von passiver Intermodulation (PIM)

Die Qualität einer Verbindung zwischen einer fest installierten Sende- und Empfangseinrichtung (BTS, base transceiver station) und einem Endgerät (UE, user equipment) spielt in heutigen Mobilfunknetzen eine wesentliche Rolle. Durch die hohe erzeugte Leistung in der BTS einerseits und die notwendige Empfindlichkeit der Empfänger der BTS und UE andererseits können Störungen im Übertragungsweg die Empfindlichkeit der Empfänger und damit die Qualität der Verbindung wesentlich beeinflussen.

Ein maßgeblicher Effekt, welcher Störungen im Übertragungsweg hervorruft, ist die Intermodulation. Dabei erzeugen beispielsweise zwei Sendesignale mit zwei verschiedenen Trägerfrequenzen, welche mit hoher Leistung in einer BTS erzeugt werden, durch Intermodulation an Stellen mit nichtlinearem Übertragungsverhalten (oft einfach "Nichtlinearitäten" genannt) Störungen, deren Frequenzen Summen und Differenzen ganzzahliger Vielfacher der Frequenzen der Sendesignale sind. Ein Teil dieser Störungen kann in das Empfangsband der BTS fallen und damit die Qualität der Kommunikation beeinträchtigen. Werden diese Störungen an passiven Elementen erzeugt, spricht man von passiver Intermodulation (PIM).

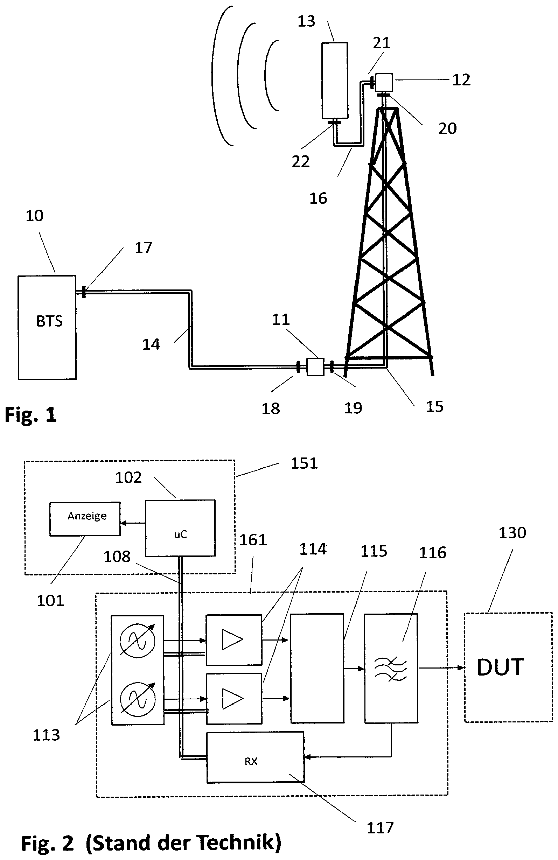

Fig. 1 ist eine schematische Darstellung, die einen Signalübertragungspfad von einer BTS bis zu einer Antenne zeigt. Die BTS 10 ist über ein erstes Filter 11 und ein zweites Filter 12 mit der Antenne 13 verbunden. Die BTS 10, die Filter 11 und 12 und die Antenne 13 sind über Hochfrequenzkabel 14, 15 und 16 miteinander verbunden, die über Hochfrequenzverbinder 17 bis 22 an die jeweiligen Elemente angeschlossen sind. In allen Komponenten 11 bis 22 des Signalübertragungspfads kann PIM auftreten. Beispielsweise können Korrosion in Steckverbindern, Oxidschichten an Kontakten und Metall-Metall-Übergängen, Verunreinigungen in Materialien und ungenügend befestigte Steckverbindungen PIM hervorrufen.

Zur Sicherstellung und Überprüfung der Qualität der Übertragungseinrichtung und/oder zur Ortung solcher Fehlstellen werden Messungen der PIM durchgeführt. Da PIM insbesondere bei hohen Leistungen auftritt, wird diese in der Regel bei Anwendung von hoher Sendeleistung, z.B. 2 * 20 W, gemessen.

Aufbau von herkömmlichen PIM-Messgeräten

Spezielle Messgeräte stehen zur Messung von PIM zur Verfügung. Ein herkömmlicher PIM-Analysator ist beispielhaft in Fig. 2 dargestellt. Er besteht aus einer Steuereinheit 151 und einer Signaleinheit 161. In der Signaleinheit 161 werden dabei Hochfrequenzsignale mit geeigneten unterschiedlichen Frequenzen f1 und f2 in den Signalquellen 113 erzeugt und in den beiden Leistungsverstärkern 114 verstärkt. Im Combiner/Addierer 115 werden die beiden Sendesignale kombiniert und zum zu testenden Gerät 130 (device under test, DUT) gesendet. Die im DUT 130 auftretende PIM wird im Filter 116 selektiert und im Messempfänger 117 detektiert und vermessen. Die Steuerung, Auswertung der Messergebnisse und Darstellung erfolgt in der Steuereinheit 151.

Ein derartiges Gerät ist bspw. in der Druckschrift DE 10 2010 015 102 A1 beschrieben.

Durch die Erfindung zu lösendes Problem

Es hat sich allerdings herausgestellt, dass die eingangs beschriebenen Verfahren und Messgeräte aufgrund von Rauschen und anderen Störsignalen bzw. unerwünschten Signalanteilen im Intermodulationssignal oftmals keine zufriedenstellende Qualitätsüberprüfung von Signalübertragungspfaden zulassen. Insbesondere ist die Ortsauflösung bei der Ortung von Fehlstellen oftmals nur unzureichend.

**EP 3 195 488 B1**

Zusammenfassung der Erfindung

In Anbetracht der beschriebenen Probleme ist es die Aufgabe der vorliegenden Erfindung, ein Verfahren zum Messen von in einem Signalübertragungspfad erzeugter passiver Intermodulation unter Verringerung unerwünschter Störsignale dahingehend zu verbessern, dass eine optimale Qualitätsüberprüfung eines zu überprüfenden Abschnitts des Signalübertragungspfads sowie eine zuverlässige Ortung darin ggf. vorhandener Störstellen möglich ist.

Diese Aufgabe wird durch ein Messverfahren gemäß Patentanspruch 1 gelöst. Vorteilhafte optionale Verfahrensmerkmale sind in den abhängigen Ansprüchen beschrieben. Ferner wird die Aufgabe durch ein Messgerät gemäß Patentanspruch 13 gelöst.

Der Signalübertragungspfad der vorliegenden Erfindung besteht aus zwei Abschnitten, nämlich dem Eingangsabschnitt und dem Messabschnitt, wobei sowohl in dem Eingangsabschnitt als auch in dem sich daran anschließenden Messabschnitt Anteile eines Intermodulationssignals wie etwa Intermodulationsprodukte vorgegebener Ordnung erzeugt werden können. Der Eingangsabschnitt kann insbesondere einen sich von dem Combiner 115 über den Filter 116 und darüber hinaus erstreckenden Teil des Signalübertragungspfads umfassen, während der Messabschnitt denjenigen sich daran anschließenden Teil des Signalübertragungspfads bildet, der auf seine Qualität und auf mögliche Fehlstellen hin überprüft werden soll.

Die Erfindung geht insbesondere auf die Erkenntnis zurück, dass, wie in allen Komponenten des in Fig.1 dargestellten Signalübertragungspfads, auch innerhalb des Messgerätes passive Intermodulation auftreten kann, welche im Folgenden mit Eigenstörung rPIM (residual PIM) bezeichnet wird. Dies ist in Fig. 2 insbesondere im Filter 116 und/oder im Combiner 115 der Fall, die in dem Eingangsabschnitt des Signalübertragungspfads angeordnet sind. Die Anwendung qualitativ sehr hochwertiger und teurer Filter ist derzeit Stand der Technik. Die Messgenauigkeit und Messempfindlichkeit des Messgerätes wird durch die Eigenstörung des Filters 115 und anderer Komponenten im Eingangsabschnitt dennoch maßgeblich beeinflusst.

Erfindungsgemäß wird diese durch das Messgerät selbst bzw. durch andere im Eingangsabschnitt angeordnete Komponenten erzeugte Eigenstörung dadurch vermindert und somit die Messgenauigkeit erhöht, dass ein Kompensationssignal $u_c(t)$ in Abhängigkeit von dem in dem Eingangsabschnitt erzeugten ersten Intermodulationssignalanteil $u_{rPIM}(t)$ erzeugt wird, und das Kompensationssignal $u_c(t)$ in den Signalübertragungspfad zum Verringern oder Auslöschen des ersten Intermodulationssignalanteils $u_{rPIM}(t)$ eingekoppelt wird.

Bei dem Verfahren der o.g. Art kann erfindungsgemäß vorgesehen sein, dass zumindest einige, bevorzugt alle Schritte wie folgt durchgeführt werden:

1) Erzeugung, Verstärkung und Addition von mindestens zwei HF-Signalen,
2) Berechnung der Frequenz der Intermodulation,
3) Separation von Eigenstörungen des Messgerätes (erster Intermodulationssignalanteil) von einem Messsignal (zweiter Intermodulationssignalanteil),
4) Demodulation, Leistungsmessung und/oder Filterung der Eigenstörungen,
5) Berechnung und Erzeugung des Kompensationssignals
6) Einspeisung des Kompensationssignals in den Signalübertragungspfad.

Nach dem Einspeisen des Kompensationssignals umfasst das zu dem Messgerät rückreflektierte Intermodulationssignal nahezu nur noch bzw. ausschließlich im Messabschnitt erzeugte Intermodulationssignalanteile. Der rückreflektierte Intermodulationssignalanteil $u_{rx1}$ kann dann erfasst und daraus eine oder mehrere Stellen in dem Messabschnitt des Signalübertragungspfads geortet werden, die im Sinne von Hochfrequenzübertragungseigenschaften des Signalübertragungspfads fehlerhaft sind. Das rückreflektierte Intermodulationssignal enthält folglich kaum mehr störende, durch das Messgerät selbst erzeugte Intermodulationsprodukt-Anteile, die die Messqualität beeinträchtigen können.

Vorzugsweise werden das erste und/oder das zweite HF-Signal nach ihrer Erzeugung verstärkt, addiert und anschließend in den Signalübertragungspfad eingeleitet.

Besonders wichtig ist eine zuverlässige Separation der im Messabschnitt erzeugten Intermodulationsprodukte von den durch das Messgerät selbst erzeugten und zu korrigierenden Intermodulationsprodukten, da das Kompensationssignal auf Grundlage der im Messgerät erzeugten Intermodulationsprodukte zu erzeugen ist. Deshalb wird vorzugsweise zumindest ein Teil des ersten Intermodulationssignalanteils $u_{rPIM}(t)$ von dem zweiten Intermodulationssignalanteil $u_{PIM}(t)$ bevorzugt unter Verwendung eines Richtkopplers separiert. Durch den Richtkoppler kann ein aus dem Eingangsabschnitt bzw. aus dem Messgerät auslaufender Anteil eines Gesamtsignals $u_{tot}$ ausgekoppelt werden, da dieser auslaufende Anteil nur den ersten Intermodulationssignalanteil, nicht jedoch den zweiten Intermodulationssignalanteil enthält. Nach dem Auskoppeln kann der erste Intermodulationssignalanteil von ebenfalls auslaufenden Anteilen der ersten und zweiten HF-Signale bspw. mittels eines Filters getrennt werden. Dazu ist es zweckmäßig, dass das Intermodulationssignal in einem anderen Frequenzbereich liegt als die beiden HF-Signale $u_1$, $u_2$, so dass eine zuverlässige Separation möglich ist. Bspw. umfasst das Intermodulationssignal Intermodulationsprodukte dritter Ordnung mit

3

der Frequenz ($2f_1 - f_2$) o. dgl. Alternativ umfasst das Intermodulationssignal Intermodulationsprodukte zweiter, fünfter oder siebter Ordnung.

Nach dem Separieren können eine oder mehrere Größen des ausgekoppelten ersten Intermodulationssignalanteils wie etwa seine Leistung, Amplitude und/oder Phase gemessen, und das Kompensationssignal $u_c(t)$ kann auf Grundlage von zumindest einer dieser gemessenen Größen erzeugt werden. Vorzugsweise wird das Kompensationssignal derart erzeugt, dass seine Überlagerung mit dem ersten Intermodulationssignalanteil im Signalübertragungspfad diesen auslöscht bzw. minimiert. Dazu kann gelten: $u_c(t)=-u_{rPIM}(t)$.

Im Falle eines sinusförmigen Intermodulationssignals kann $u_c(t)$ bspw. im Wesentlichen dem um 180° phasenverschobenen ersten Intermodulationssignalanteil entsprechen. Im Falle von modulierten HF-Signalen ist das Intermodulationssignal ebenfalls moduliert, wobei diese zu erwartende Modulation ausgehend von den HF-Signalen bestimmbar ist. Das Kompensationssignal kann dann mit einer der zu erwartenden Modulation entsprechenden Modulation erzeugt werden und in Leistung bzw. Amplitude und Phase derart angepasst werden, dass das erste Intermodulationssignal durch die Einspeisung des erzeugten Kompensationssignals minimiert wird.

Im Hinblick auf eine besonders exakte Erzeugung des Kompensationssignals sowie im Hinblick auf eine Anpassung an mögliche Signaländerungen durch äußere Einflüsse o. dgl. hat es sich als zweckmäßig herausgestellt, dass das Kompensationssignal $u_c(t)$ in einem iterativen Verfahren derart geregelt bzw. wiederholt angepasst wird, dass sich nach dessen Einleitung in den Signalübertragungspfad eine Minimierung des ersten Intermodulationssignalanteils $u_{rPIM}(t)$ ergibt.

Im Hinblick auf eine zuverlässige Auslöschung der Eigenstörung des Messgeräts hat es sich als vorteilhaft erwiesen, das Kompensationssignal derart zu erzeugen und in den Signalübertragungspfad einzuleiten, dass die Leistung des durch den Richtkoppler ausgekoppelten Teils des ersten Intermodulationssignals minimiert wird. Die Leistung eines separierten Signalanteils kann nämlich besonders einfach und zuverlässig gemessen werden. Je nach erfasster Leistung findet eine Anpassung des zu erzeugenden Kompensationssignals statt, wobei insbesondere die Amplitude und/oder die Phase des zu erzeugenden Kompensationssignals angepasst werden können. Gemäß einem besonders bevorzugten erfindungsgemäßen Verfahren werden abwechselnd die Phase und die Amplitude des zu erzeugenden Kompensationssignals als Regelparameter verwendet und jeweils solange variiert, bis die Leistung des ausgekoppelten ersten Intermodulationssignalanteils minimiert ist. Auf diese Weise kommt man besonders schnell und in wenigen Iterationsschritten zu einer Auslöschung der Eigenstörung.

Alternativ können jedoch auch nur eine oder auch mehr als zwei Regelgrößen verwendet werden. In diesen Fällen ist nicht notwendigerweise ein iteratives Verfahren erforderlich.

Vorteilhafterweise wird das Kompensationssignal $u_c(t)$ insbesondere mittels eines Richtkopplers zwischen dem Eingangsabschnitt und dem Messabschnitt in den Signalübertragungspfad eingeleitet. Alternativ ist auch eine Einleitung an anderer Stelle möglich, bspw. bereits unmittelbar bei oder nach der Erzeugung des ersten und/oder zweiten HF-Signals.

Die Verwendung des Richtkopplers hat den Vorteil, dass er sowohl zum Auskoppeln eines zu separierenden und zu vermessenden Anteils des Intermodulationssignals als auch zum Einkoppeln des Kompensationssignals verwendet werden kann.

Alternativ oder zusätzlich kann der erste Intermodulationssignalanteil $u_{rPIM}(t)$ von dem zweiten Intermodulationssignalanteil $u_{PIM}(t)$ mittels eines Zeitfensterverfahrens separiert werden. Bei einem "Zeitfensterverfahren" werden PIM-Anteile bestimmt, die innerhalb eines vorgegebenen Zeitfensters liegen, das dem Eingangsabschnitt entsprechen kann.

Bei Verwendung eines Zeitfensterverfahrens ist es nicht bzw. nicht ausschließlich erforderlich, zumindest einen Teil der Eigenstörung (bzw. des ersten Intermodulationssignals) mittels eines Richtkopplers o.dgl. auszukoppeln. Vielmehr können die beiden HF-Signale $u_1$ und $u_2$ bereits derart erzeugt werden, dass ein aus den beiden HF-Signalen erzeugtes Intermodulationssignal eine Information über Erzeugungsorte darin enthaltener Intermodulationssignalanteile enthält. Dies ist durch einen vorgegebenen Signalverlauf bzw. eine vorgegebene Modulation des ersten und/oder zweiten HF-Signals möglich, bei dem sich je nach Erzeugungsort eines aus dem Kombinationssignal $u_1 + u_2$ erzeugten Intermodulationsprodukts ein vorgegebener definierter zeitlicher Verlauf (bzw. ein vorgegebener Modulationsverlauf) des Intermodulationssignals ergibt, der nach Analyse bzw. nach Vergleich mit dem ersten und/oder zweiten HF-Signal oder einem daraus erzeugen Vergleichssignal Rückschlüsse auf den Erzeugungsort des Intermodulationsprodukts zulässt.

Beispielsweise wird die Frequenz $f_1$ des ersten HF-Signals $u_1(t)$ mit einer vorbestimmten Änderungsrate $df/dt$ über die Zeit von einer vorbestimmten Anfangsfrequenz $f_{ANFANG}$ bis zu einer vorbestimmten Endfrequenz $f_{ENDE}$ kontinuierlich und zeitlich wiederholt variiert (gesweept), und das zweite HF-Signal wird mit einer konstanten vorbestimmten Frequenz $f_2$ erzeugt. In diesem Fall lässt sich nämlich der Erzeugungsort eines aus dem Signalpfad rückreflektierten Intermodulationsprodukts aus einer Frequenzdifferenz zwischen der Frequenz des rückreflektierten Intermodulationsprodukts und der Frequenz eines an einem bekannten Ort erzeugten Intermodulationsprodukts bestimmen. Details sind in der bereits genannten Druckschrift DE 10 2010 015 102 A1 beschrieben und werden durch Verweis in die vorliegende Offenbarung aufgenommen. Das Kompensationssignal kann dann auf Grundlage des vor dem Beginn des Messabschnitts im Signalübertragungspfad erzeugten ersten Intermodulationssignalanteils erzeugt und an einer vorgegebenen Zuführstelle dem Signalübertragungspfad zugeführt werden.

Auch andere ein Zeitfensterverfahren ermöglichende Zeitverläufe und/oder Modulationen der HF-Signale sind möglich. Gemäß einer besonders vorteilhaften Ausführungsform eines Zeitfensterverfahrens wird zumindest eines der HF-Signale mit einer Trägerfrequenz und einem darauf aufmodulierten digitalen Signal $u_{CODE}$ erzeugt. Details für ein solches Zeitfensterverfahren sind in der noch nicht veröffentlichen Patentanmeldung DE 10 2014 007 151.0 offenbart und werden durch Verweis in die vorliegende Offenbarung aufgenommen. Zweckmäßigerweise wird zur Erzeugung des digitalen Signals $u_{CODE}$ ein bevorzugt periodisches Frame-Taktsignal mit einem Spreizcode multipliziert, wobei vorzugsweise der Spreizcode eine Folge von Chips aufweist.

Bei allen oben beschriebenen Ausführungsformen werden vorzugsweise das erste HF-Signal $u_1(t)$ und das zweite HF-Signal $u_2(t)$ mit vorbestimmten unterschiedlichen Trägerfrequenzen $f_1$, $f_2$ erzeugt, so dass sich die Frequenz des Intermodulationssignals von den Trägerfrequenzen unterscheidet. Zumindest eine Trägerfrequenz kann ein auf die Trägerfrequenz mit einer vorgegebenen Modulationsart aufmoduliertes, vorzugsweise digitales, Signal aufweisen.

Gemäß einem weiteren Gesichtspunkt umfasst die Erfindung ein Messgerät zum Durchführen des erfindungsgemäßen Verfahrens.

Dieses Messgerät weist vorzugsweise auf: zwei Signalquellen zum Erzeugen von zwei HF-Signalen u1(t), u2(t), einen Combiner zum Zusammenführen der beiden HF-Signale und zum Einleiten in einen Signalübertragungspfad mit einem Eingangsabschnitt und einem sich daran anschließenden Messabschnitt, eine Vorrichtung zum Auskoppeln eines in dem Signalübertragungspfad erzeugten Intermodulationssignalanteils, und eine Kompensationseinheit zum Erzeugen eines Kompensationssignals $u_c(t)$ in Abhängigkeit von dem in dem Eingangsabschnitt des Signalübertragungspfads erzeugten Anteil des Intermodulationssignals und ggf. zum Einkoppeln des Kompensationssignals $u_c(t)$ in den Signalübertragungspfad.

Der Combiner und die Vorrichtung zum Auskoppeln, insbes. ein Filter, können durch ein einzelnes Bauteil wie etwa einen Filter-Combiner bereitgestellt sein.

Die im Zusammenhang mit dem erfindungsgemäßen Verfahren beschriebenen Merkmale können, mutatis mutandis, auch einzeln oder in beliebiger Kombination bei dem erfindungsgemäßen Messgerät vorgesehen sein, wobei auf die obigen Ausführungen verwiesen wird.

Insbesondere kann das Messgerät einen bevorzugt zwischen dem Eingangsabschnitt und dem Messabschnitt in dem Signalübertragungspfad angeordneten Richtkoppler zum Einkoppeln des Kompensationssignals $u_c(t)$ in den Signalübertragungspfad und/oder zum Auskoppeln eines ausgehend von dem Eingangsabschnitt in den Richtkoppler einlaufenden Signalanteils $u_{rx2}$ aufweisen.

Das Kompensationssignal kann mittels einer dritten Signalquelle und/oder einem Modulator in einem iterativen Verfahren derart erzeugt werden, dass sich eine Minimierung des ersten Intermodulationssignalanteils $u_{rPIM}(t)$ ergibt.

In einer bevorzugten Ausführungsform umfasst das erfindungsgemäße Messgerät zur Messung von vorzugsweise passiver Intermodulation mit Kompensation der Eigenstörung ein Messsystem, eine Controller-Einheit und eine Kompensationseinheit (Predistortion-Einheit). Durch die Kompensationseinheit wird die Eigenstörung (bzw. der erste Intermodulationssignalanteil) von dem zu messenden zweiten Intermodulationssignalanteil separiert. In einem Empfänger kann die Eigenstörung demoduliert, detektiert und/oder ihre Leistung ermittelt werden. Die Parameter für ein Korrektursignal können in der Controlling-Einheit berechnet werden, und das Kompensationssignal (Korrektursignal) kann anschließend in einer Signalquelle und einem Modulator erzeugt und in den Signalübertragungspfad eingekoppelt werden. Alternativ oder zusätzlich variiert eine Regelschleife die Parameter des Kompensationssignals iterativ, bis die Eigenstörung minimiert ist.

Weitere vorteilhafte Merkmale der Erfindung ergeben sich aus der nun folgenden Beschreibung anhand der beigefügten Figuren, auf die hinsichtlich in der Beschreibung nicht näher herausgestellter, erfindungswesentlicher Einzelheiten ausdrücklich verwiesen wird.

Kurzbeschreibung der Figuren

Fig.1 ist eine schematische Darstellung, die den Übertragungsweg von einer BTS bis zur Antenne zeigt,

Fig.2 ist ein Blockschaltbild, das den Aufbau einer herkömmlichen PIM Testvorrichtung zeigt,

Fig.3 ist eine schematische Darstellung, die ein Messgerät gemäß einer ersten Ausführungsform der vorliegenden Erfindung zur Ausführung des erfindungsgemäßen Verfahrens zeigt,

Fig.4 ist eine schematische Darstellung der Signale im Signalübertragungspfad nach Erzeugung eines Intermodulationssignals dritter Ordnung,

Fig.5 ist eine beispielhafte Darstellung des ersten Intermodulationssignalanteils $u_{rPIM}$, des Kompensationssignals $u_{cPIM}$ und des zweiten Intermodulationssignalanteils $u_{PIM}$,

Fig.6    ist eine schematische Darstellung des Richtkopplers,

Fig. 7   ist eine schematische Darstellung eines iterativen Verfahrens zum Erzeugen und Optimieren des Kompensationssignals unter Verwendung der Regelparameter Amplitude und Phase,

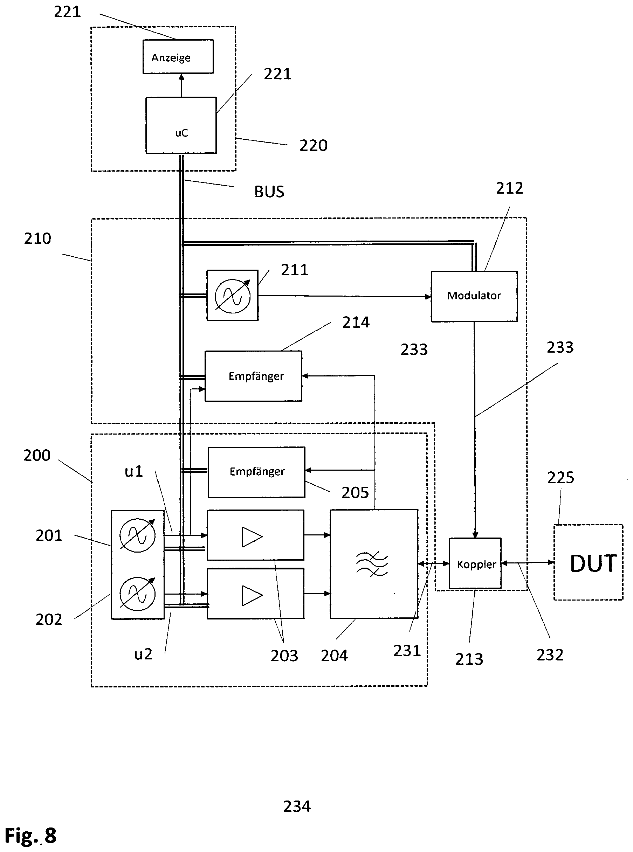

Fig. 8   ist eine schematische Darstellung, die ein Messgerät gemäß einer zweiten Ausführungsform der vorliegenden Erfindung zur Ausführung des erfindungsgemäßen Verfahrens zeigt, und

Fig.9    zeigt die Separation von Eigenstörung und Intermodulation im DUT mittels Entfernungsmessung.

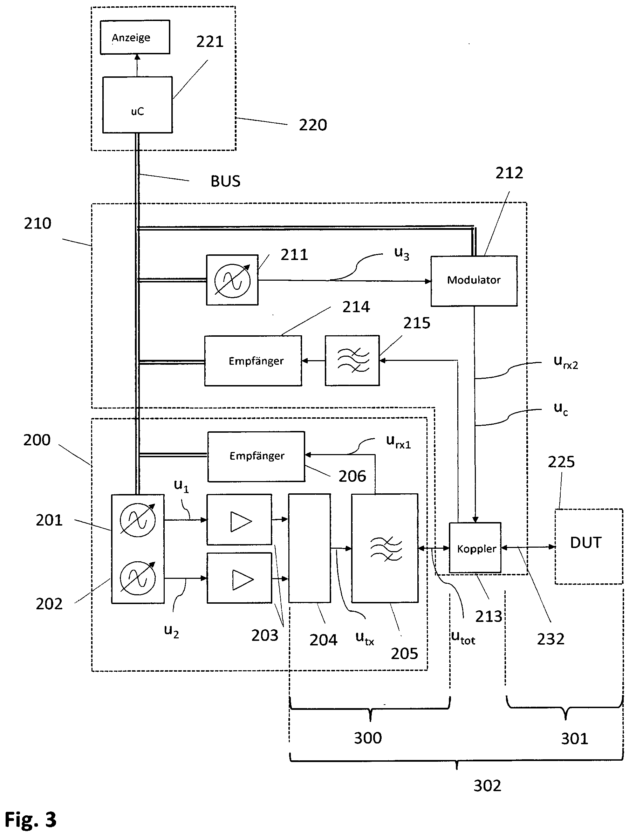

Fig. 3. ist die schematische Darstellung einer ersten Ausführungsform eines erfindungsgemäßen Messgerätes zur Ausführung des erfindungsgemäßen Verfahrens zur Messung von PIM mit Predistortion. Diese Ausführungsform besteht aus einer Messeinheit 200, einer Predistortion-Einheit 210, einer Controller-Einheit 220 und einem Device under Test (DUT) 225.

Messeinheit: Die Mess-Einheit 200 besteht aus mindestens 2 Signalquellen 201 und 202, mindestens 2 Verstärkern 203, einem Combiner 204, einem Filter 205 und einem Empfänger 206.

Signalquellen: Die zwei Signalquellen 201 und 202 sind mit einer Controller-Einheit 220 verbunden. Sie erzeugen Signale $u_1(t)$ und $u_2(t)$, die je nach Ausführungsform sinusförmig oder moduliert sein können. Vorzugsweise weisen die beiden Signale unterschiedliche Trägerfrequenzen $f_1$ und $f_2$ auf.

Verstärker: Die beiden Signalquellen sind mit den beiden Verstärkern 203 verbunden.

Combiner: Der Combiner 204 ist mit den beiden Verstärkern 203 einerseits, und mit dem TX Pfad des Filters 205 andererseits verbunden.

Filter: Das Filter 205 ist einerseits mit dem Combiner 204 und mit einem Empfänger 206 verbunden. Andererseits ist das Filter 205 mit einem (Richt-)Koppler 213 verbunden.

Empfänger: Der Receiver 206 ist einerseits mit dem Filter 205, andererseits mit der Controller-Einheit 220 verbunden.

Predistortion-Einheit: Die Predistortion-Einheit 210 weist auf: eine Signalquelle 211, einen Modulator 212, einen Koppler 213, einen Empfänger 214 und einen Filter 215.

Signalquelle: Die Predistortion-Einheit weist die Signalquelle 211 zum Erzeugen zumindest einer Trägerfrequenz (bspw. $2f_1$-$f_2$) des Kompensationssignals auf, welche einerseits mit der Controller-Einheit 220 und andererseits mit dem Modulator 212 verbunden ist.

Modulator: Der Modulator 212 ist mit der Signalquelle 211, der Controller-Einheit 220 und dem Koppler 213 verbunden und dient zum Modulieren des durch die Signalquelle 211 erzeugten Signals zum Erzeugen des Kompensationssignals.

Zweiter Empfänger: Ein zweiter Receiver 214 ist mit dem Koppler 213 und der Controller-Einheit 220 verbunden. Dieser Receiver 214 dient zum Empfangen und ggf. Vermessen eines ausgekoppelten Anteils des zu minimierenden Eigensignals (bzw. ersten Intermodulationssignalanteils).

Koppler: Der Koppler 213 verbindet die Messeinheit 200 mit dem DUT 225, als auch den zweiten Receiver 214 und den Modulator 212.

Im Folgenden werden die Bezeichnungen der Signale bei Intermodulation definiert.

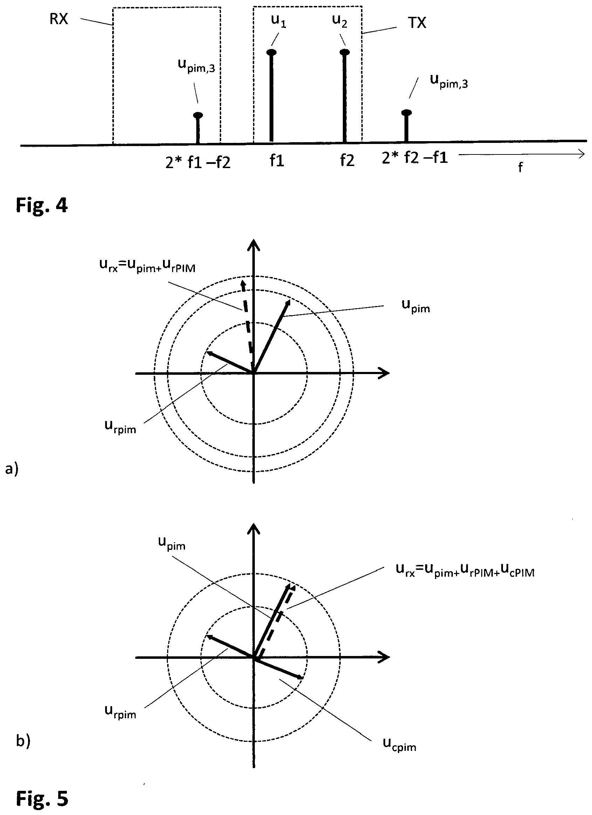

Fig. 4 zeigt beispielhaft zwei Signale und die Entstehung von PIM. Zwei Signale $u_1$ und $u_2$ haben dabei die Trägerfrequenzen $f_1$ und $f_2$. An Nichtlinearitäten entstehen dabei Intermodulationsprodukte $u_{PIM,o}$ der Ordnung o gemäß

$$f_{pim} = nf_1 + mf_2 \qquad (1)$$

$$o = |n| + |m| \qquad (2)$$

Die beiden Signale $u_1$ und $u_2$, sowie Intermodulationsprodukte (im gezeigten Beispiel 3. Ordnung $u_{PIM,3}$ mit den Frequenzen $2f_1$-$f_2$ und $2f_2$-$f_1$) sind in Fig. 4 dargestellt. Bei Installationen gemäß Fig. 1 liegen dabei $u_1$ und $u_2$ im Sendeband, welches in Fig. 4 mit TX bezeichnet ist. Die Funktion der Übertragungseinrichtung ist insbesondere dann gestört, wenn, wie in Fig. 4 veranschaulicht, $u_{PIM,3}$ in das Empfangsband fällt, welches in Fig. 4 mit RX bezeichnet ist. Die Variablen m, n, o sind ganze Zahlen.

Die Messeinheit 200 dient zur Messung von passiver Intermodulation im DUT. Zu diesem Zweck werden zunächst in den beiden Signalgeneratoren 201 und 202 zwei Signale $u_1$ und $u_2$ erzeugt. Diese Signale können amplituden- und phasenmoduliert sein. In der beschriebenen Ausführungsform ist $u_1$ phasenmoduliert und $u_2$ sinusförmig:

$$u_1(t) = a_1 e^{j2\pi t f_1} e^{j\phi_1(t)} \qquad (3)$$

$$u_2(t) = a_2 e^{j2\pi f_z t} \qquad (4)$$

Im Combiner 204 werden $u_1$ und $u_2$ zu $u_{tx}$ addiert. Das Signal $u_{tot}$ am Ausgang des Filters besteht (ohne Berücksichtigung der Eigenstörung und des im Folgenden erläuterten Korrektursignals) aus

$$u'_{tot}(t) = u_1(t) + u_2(t) + u_{PIM,o}(t) \qquad (5)$$

Im Filter 205 werden TX Band und RX Band getrennt, so dass am Eingang des Empfängers 206 das Signal $u_{PIM,o}$ anliegt. Nach Berechnung der Frequenz $f_{PIM}$ wird das Signal $u_{PIM,o}$ empfangen und die Leistung des Signals gemessen und digitalisiert. Über den BUS wird die Leistung an die Controller-Einheit 220 übertragen, wo sie angezeigt wird. Die Signalamplitude kann als Maß für die Leitungsqualität verwendet werden. Ferner kann das Signal zur Ortung von Störstellen verwendet werden. In diesem Zusammenhang wird auf die Druckschriften DE 10 2010 015 102 A1 und DE 10 2012 023 448 A1 verwiesen, deren Inhalt im Hinblick auf das Orten von fehlerhaften Stellen in Signalübertragungspfaden durch Verweis vollständig in die vorliegende Offenbarung aufgenommen wird.

Im Folgenden werden die das erfindungsgemäße Verfahren auszeichnenden Verfahrensschritte näher erläutert:

An Nichtlinearitäten, insbesondere im Combiner 204, im Filter 205 und/oder an Übergängen im Signalübertragungspfad werden nach denselben Mechanismen wie bei PIM Eigenstörungen (bzw. erste Intermodulationssignalanteile) erzeugt, welche im Folgenden mit residual passive Intermodulation (rPIM) bezeichnet werden. Da die Eigenstörungen dem gleichen Mechanismus zur Entstehung folgen, aber an unterschiedlichen Stellen entlang des Übertragungspfades entstehen und auch unterschiedliche Amplitude haben, lässt sich rPIM der Ordnung o darstellen als:

$$u_{rPIM,o}(t) = u_{PIM}(t) a_{rPIM} e^{j\phi_r PIM} \qquad (6)$$

wobei $a_{rPIM}$ die Amplitude darstellt. Die Phasenverschiebung ist durch $\phi_{rPIM}$ gegeben. Die Verfälschung des Messergebnisses von $u_{rx}$ ist in Fig. 5a dargestellt. Die beiden Zeiger der Signale $u_{PIM}$ und $u_{rPIM}$ addieren sich zum Signal $u_{rx}$. Die Verfälschung der Leistungsmessung ergibt sich aus der Differenz der Zeigerlängen von $u_{rx}$ und $u_{PIM}$.

Wirkung der Predistortion: Die grundlegende Idee des erfindungsgemäßen Verfahrens besteht darin, die Eigenstörung zu kompensieren und dadurch die Genauigkeit der Messung zu verbessern. Dazu wird ein Kompensationssignal $u_c$ (auch als $u_{cPIM}$ bezeichnet) erzeugt, welches das Signal $u_{rPIM,o}$ auslöscht:

$$u_c + u_{rPIM,o} = 0 \qquad (7)$$

Fig. 5b zeigt die Signale $u_{PIM}$, $u_{rPIM}$ und $u_c$ im Zeigerdiagramm.

Das Kompensationssignal $u_c$ wird im Modulator 212 erzeugt. Das Signal $u_{PIM}(t)$ hat den zeitlichen Verlauf:

$$u_{PIM}(t) = a_{PIM} e^{j\pi(nf1+mf2)t} e^{j(m+n)\theta 1(t)} \qquad (8)$$

In der Controller-Einheit werden hierzu die Koeffizienten m und n berechnet. Aus Gleichung (1) und Gleichung (8) wird ein Signal $u_3(t)$ bestimmt gemäß

$$u_3(t) = u_{PIM}(t) \qquad (9)$$

Die Parameter für die Frequenz $f_{pim}$ und die Signalform werden über den BUS zum Signalgenerator übertragen, wo das Signal $u_3(t)$ erzeugt wird.

Dazu wird das Signal $u_3$ des Signalgenerators 212 im Modulator multipliziert, so dass ein Signal der Form entsteht:

$$u_c(t) = u_3(t) a_{rPIM} e^{j\phi} \qquad (10)$$

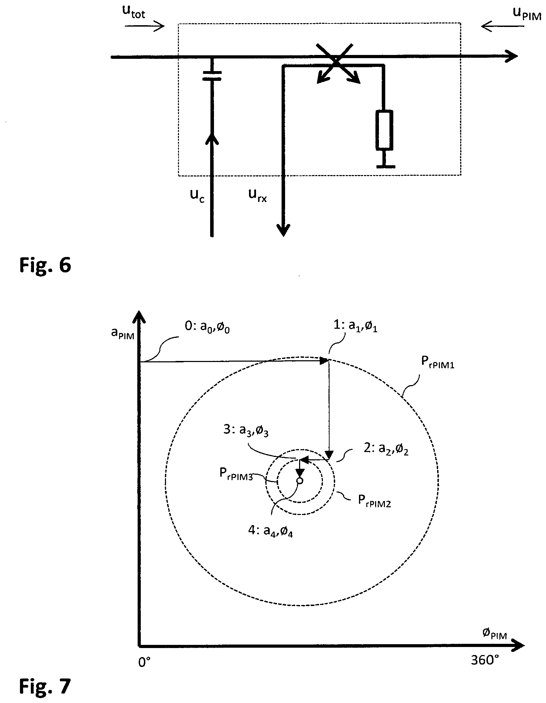

Wesentlich für die Berechnung des Korrektursignals $u_c$ ist die Trennung der Signale $u_{PIM}$ und $u_{rPIM}$. In der ersten Ausführungsform erfolgt dies durch Verwendung eines Richtkopplers. Um die Amplitude $a_{rPIM}$ und Phase $\varnothing_{rPIM}$ berechnen zu können, wird das Signal $u_{rx2}$ im Koppler 213 aus dem Signal $u_{tot}$ ausgekoppelt. In Fig. 6 ist die Wirkungsweise des Kopplers 213 dargestellt. Das Sendesignal $u_{tot}$ wird dabei im Eingang eigespeist. Durch die Koppeldämpfung k gedämpft, wird das Signal $u_{rx2}$ ausgekoppelt. Durch die nicht ideale Richtschärfe r wird ein Teil des Signals vom $u_{PIM}$ vom DUT ebenfalls in das Signal $u_{rx2}$ eingekoppelt, so dass das Signal $u_{rx2}$ sich ergibt aus

$$u_{rx2}=ku_{tot} + kru_{PIM} \quad (11)$$

Das Signal $u_{rx}$ wird vom Empfänger 214 empfangen und die Leistung $P_{rPIM}$ gemessen. Die Messbandbreite des Empfängers 214 kann unterschiedlich von der Messbandbreite des Empfängers 206 sein. Die gemessene Leistung wird über den BUS an die Controlling-Einheit weitergeleitet.

Die Signalform von $u_3(t)$ ist nach Frequenz und Signalform bekannt und wird vor dem Messvorgang einmalig berechnet und über den BUS am Signalgenerator eingestellt. Da die Störung rPIM von Umwelteinflüssen, beispielsweise der Temperatur abhängig sein kann, muss sie im Laufe des Betriebs des Messgerätes nachgeregelt werden. Zur Regelung dienen die Parameter $a_{rPIM}$ und $\varnothing_{rPIM}$. Dazu wird die Gleichung

$$P_{rPIM}(a_{rPIM}, \varnothing_{rPIM}) = 0 \quad (12)$$

gelöst. Da nur ein Messwert $P_{rPIM}$ für die Einstellung von 2 Parametern zur Verfügung steht, geschieht dies in einem iterativen Verfahren. Ein derartiges iteratives Verfahren ist beispielhaft in Fig. 7 dargestellt. Das Iterationsverfahren startet bei dem Wertepaar 0: $a_0$, $\varnothing_0$. Als Schätzwert für $a_0$ kann beispielsweise die gemessene Amplitude von PIM verwendet werden, für $\varnothing_0$ wird beispielhaft $\varnothing_0=0°$ verwendet. Für den ersten Iterationsschritt mit dem Ergebnis 1: $a_1$, $\varnothing_1$ wird $\varnothing$ so lange bei konstantem a variiert, bis die gemessene Leistung von $P_{rPIM}$ minimal ist. Im dargestellten Beispiel wird dabei $P_{rPIM1}$ erreicht. Im zweiten Iterationsschritt wird bei konstantem $\varnothing$ die Amplitude solange variiert, bis sich wiederum der minimale Wert $P_{rPIM2}$ einstellt, wobei $P_{rPIM2} < P_{rPIM1}$. Dieses Verfahren wird solange wiederholt, bis sich keine Verbesserung der gemessenen Leistung $P_{rPIM}$ ergibt: $P_{rPIM, n+1} \approx P_{rPIM, n}$.

Alternative Ausführungsform

In einer alternativen Ausführungsform kommt eine unterschiedliche Methode zur Auskopplung des Empfangssignals $u_{rx}$ und Separation der Störungen rPIM und PIM zur Anwendung.

In Messgeräten zur Messung von passiver Intermodulation kommen Verfahren zur Anwendung, welche eine Methodik zur Messung der Distanz des Messgerätes bis zu einer Störung ermöglichen. In DE 10 2012 023 448 A1 ist eine Methodik offenbart, die eine derartige Messung ermöglicht.

Dabei wird das Signal $u_1$ frequenzmoduliert dergestalt, dass sich eine Signalform gemäß der in DE 10 2012 023 448 A1 beschriebenen Methode ergibt. Die Frequenz $f_1$ wird dabei von einer Startfrequenz $f_{1start}$ bis zu einer Endfrequenz $f_{1stop}$ kontinuierlich und zeitlich variiert (gesweept), so dass

$$f_1(t) = \frac{df}{dt} t \quad (13)$$

Gemäß der Offenbarung in DE 10 2012 023 448 A1 wird im Empfänger die Differenzfrequenz $f_d$ erzeugt, durch die sich der Abstand zur Störung l berechnen lässt gemäß:

$$l = \frac{c\, f_d}{2 \frac{df}{dt}} \quad (14)$$

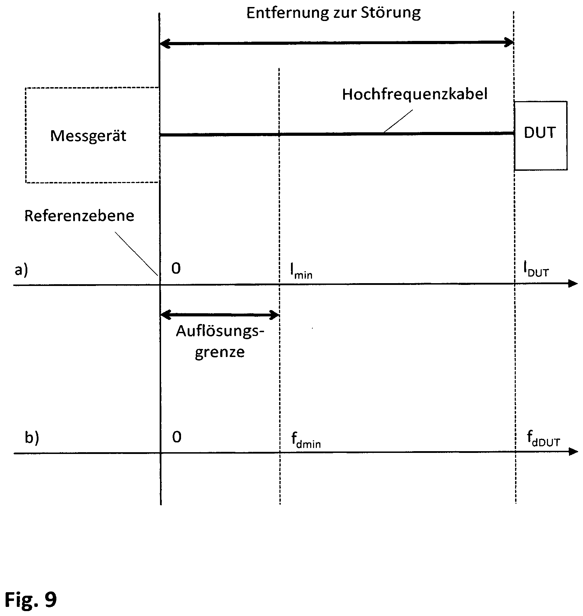

Fig. 9 verdeutlicht den Zusammenhang zwischen der räumlichen Anordnung von Messgerät und DUT und der Differenzfrequenz $f_d$. Fig. 9a veranschaulicht ein Messgerät, welches durch ein Kabel der Länge $l_{DUT}$ mit dem DUT verbunden ist. In Fig. 9b ist die korrespondierende Frequenz des Mess-Signals $u_{mess}$ dargestellt. Gemäß (14) erzeugt eine Intermodulation im DUT ein Mess-Signal mit der Frequenz $f_{dDUT}$.

In der zweiten Ausführungsform wird das Mess-Signal gefiltert, wobei nur Spannungen mit Frequenzen $< f_{dmin}$ zur Bestimmung der Leistung von rPIM verwendet werden. Auf diese Weise ist eine Separation von PIM und rPIM gegeben. Dadurch, dass zur Messung von PIM nur Signale mit Frequenzen $>f_{dDUT}$ verwendet werden, ergibt sich eine Auflösungsgrenze $l_{min}$, die gegeben ist durch

$$l_{min} = \frac{cf_{dmin}}{2\frac{df}{dt}}$$

(15).

Das Kompensationssignal kann nun auf Grundlage der für rPIM bestimmten Leistung erzeugt und in den Signalübertragungspfad eingeleitet werden.


**Patentansprüche**

1.   Verfahren zum Messen von in einem Messabschnitt (301) eines Signalübertragungspfads (302) erzeugter passiver Intermodulation, mit folgenden Schritten:

(a) Erzeugen eines ersten HF-Signals ($u_1$(t)) mit einem vorbestimmten Frequenzverlauf und eines zweiten HF-Signals ($u_2$(t)) mit einem vorbestimmten Frequenzverlauf;
(b) Zuführen des ersten HF-Signals ($u_1$(t)) und des zweiten HF-Signals ($u_2$(t)) zu dem Signalübertragungspfad (302), wobei in dem Signalübertragungspfad (302) aus dem ersten HF-Signal ($u_1$(t)) und dem zweiten HF-Signal ($u_2$(t)) ein Intermodulationssignal erzeugt wird, das einen in einem Eingangsabschnitt (300) des Signalübertragungspfads erzeugten ersten Intermodulationssignalanteil ($u_{rPIM}$(t)) und einen in dem Messabschnitt (301) des Signalübertragungspfads erzeugten zweiten Intermodulationssignalanteil ($u_{PIM}$(t)) aufweist,
**gekennzeichnet durch** die folgenden weiteren Schritte:
(c) Erzeugen eines Kompensationssignals ($u_c$(t)) in Abhängigkeit von dem in dem Eingangsabschnitt (300) erzeugten ersten Intermodulationssignalanteil ($u_{rPIM}$(t));
(d) Einleiten des Kompensationssignals ($u_c$(t)) in den Signalübertragungspfad (302) zum Verringern oder Auslöschen des ersten Intermodulationssignalanteils ($u_{rPIM}$(t)).

2.   Verfahren nach Anspruch 1, **dadurch gekennzeichnet, dass**
(e) ein rückreflektierter Intermodulationssignalanteil $u_{rx1}$ erfasst (206) und daraus eine oder mehrere Stellen in dem Messabschnitt (301) des Signalübertragungspfads geortet werden, die im Sinne von Hochfrequenzübertragungseigenschaften des Signalübertragungspfads (302) fehlerhaft sind.

3.   Verfahren nach einem der vorhergehenden Ansprüche, **dadurch gekennzeichnet, dass** das erste und/oder das zweite HF-Signal verstärkt (203), addiert (204) und anschließend in den Signalübertragungspfad (302) eingeleitet werden.

4.   Verfahren nach einem der vorhergehenden Ansprüche, **dadurch gekennzeichnet, dass** zumindest ein Teil des ersten Intermodulationssignalanteils ($u_{rPIM}$(t)) von dem zweiten Intermodulationssignalanteil ($u_{PIM}$(t)) bevorzugt unter Verwendung eines Richtkopplers (213) und/oder eines Filters (215) separiert wird.

5.   Verfahren nach Anspruch 4, **dadurch gekennzeichnet, dass** eine oder mehrere Größen wie etwa eine Leistung, eine Amplitude, eine Phase o.dgl. des separierten Teils gemessen (214) und das Kompensationssignal ($u_c$(t)) auf Grundlage von zumindest einer der gemessenen Größen erzeugt (211, 212) wird.

6.   Verfahren nach einem der vorhergehenden Ansprüche, **dadurch gekennzeichnet, dass** das Kompensationssignal ($u_c$(t)) in einem iterativen Verfahren derart geregelt wird, dass bei dessen Einleitung der erste Intermodulationssignalanteils ($u_{rPIM}$(t)) maximal kompensiert wird.

7.   Verfahren nach den Ansprüchen 5 und 6, **dadurch gekennzeichnet, dass** das Kompensationssignal ($u_c$(t)) mittels einer Regelschleife unter der abwechselnden Einstellung seiner Amplitude $a_{rPIM}$ und seiner Phase $\Phi_{rPIM}$ derart erzeugt wird, dass die Leistung des separierten Teils des ersten Intermodulationssignalanteils ($u_{rPIM}$(t)) jeweils minimiert wird.

8.   Verfahren nach einem der vorhergehenden Ansprüche, **dadurch gekennzeichnet, dass** das Kompensationssignal ($u_c$(t)) bevorzugt mittels eines Richtkopplers (213) zwischen dem Eingangsabschnitt (300) und dem Messabschnitt (301) in den Signalübertragungspfad (302) eingeleitet wird.

9.  Verfahren nach einem der vorhergehenden Ansprüche, **dadurch gekennzeichnet, dass** eine Größe wie etwa eine Amplitude, eine Phase und/oder eine Zeitverzögerung des ersten Intermodulationssignalanteils ($u_{rPIM}(t)$) mittels eines Zeitfensterverfahrens bestimmt wird.

10. Verfahren nach einem der vorhergehenden Ansprüche, **dadurch gekennzeichnet, dass** das erste HF-Signal ($u_1(t)$) und das zweite HF-Signal ($u_2(t)$) mit vorbestimmten unterschiedlichen Trägerfrequenzen $f_1$, $f_2$ erzeugt werden, wobei auf zumindest eine der Trägerfrequenzen ein vorzugsweise digitales Signal aufmoduliert ist.

11. Verfahren nach den Ansprüchen 9 und 10, **dadurch gekennzeichnet, dass** die erste Trägerfrequenz $f_1$ und/oder die zweite Trägerfrequenz $f_2$ derart moduliert werden, dass ein aus den beiden HF-Signalen erzeugtes Intermodulationssignal eine Information über Erzeugungsorte darin enthaltener Intermodulationssignalanteile enthält.

12. Verfahren nach einem der Ansprüche 9 bis 11, **dadurch gekennzeichnet, dass** die Frequenz $f_1$ des ersten HF-Signals ($u_1(t)$) mit einer vorbestimmten Änderungsrate df/dt über die Zeit von einer vorbestimmten Anfangsfrequenz $f_{ANFANG}$ bis zu einer vorbestimmten Endfrequenz $f_{ENDE}$ kontinuierlich und zeitlich wiederholt variiert (gesweept) wird, und dass das zweite HF-Signal ($u_2(t)$) bevorzugt mit einer konstanten vorbestimmten Frequenz $f_2$ erzeugt wird.

13. Messgerät zum Durchführen des Verfahrens nach einem der vorhergehenden Ansprüche.

14. Messgerät nach Anspruch 13 mit:

   zwei Signalquellen (201, 202) zum Erzeugen von zwei HF-Signalen,
   einem Combiner (204) zum Zusammenführen der beiden HF-Signale und zum Einleiten in einen Signalübertragungspfad (302) mit einem Eingangsabschnitt (300) und einem sich daran anschließenden Messabschnitt (301), einer Vorrichtung (205) wie etwa einem Filter zum Auskoppeln eines in dem Signalübertragungspfad (302) erzeugten Intermodulationssignals, und
   einer Kompensationseinheit (210) zum Erzeugen eines Kompensationssignals ($u_c(t)$) in Abhängigkeit von dem in dem Eingangsabschnitt (300) des Signalübertragungspfads (302) erzeugten Anteil des Intermodulationssignals und zum Einkoppeln des Kompensationssignals ($u_c(t)$) in den Signalübertragungspfad (302).

15. Messgerät nach Anspruch 14, **gekennzeichnet durch** einen bevorzugt zwischen dem Eingangsabschnitt (300) und dem Messabschnitt (301) in dem Signalübertragungspfad angeordneten Richtkoppler (213) zum Einkoppeln des Kompensationssignals ($u_c(t)$) in den Signalübertragungspfad und/oder zum Auskoppeln eines von dem Eingangsabschnitt (300) einlaufenden Signalanteils $u_{rx2}$.

16. Messgerät nach einem der Ansprüche 13 bis 15, **gekennzeichnet durch** eine dritte Signalquelle (211) und einen Modulator (212) zum Erzeugen des Kompensationssignals in einem iterativen Verfahren derart, dass sich eine Minimierung des ersten Intermodulationssignalanteils ($u_{rPIM}(t)$) ergibt.

## Claims

1.  Method for measuring passive intermodulation produced in a measurement segment (301) of a signal transmission path (302), comprising the following steps:

   (a) generation of a first HF signal ($u_1(t)$) with a predetermined frequency progression and of a second HF signal ($u_2(t)$) with a predetermined frequency progression;
   (b) feeding the first HF signal ($u_1(t)$) and the second HF signal ($u_2(t)$) into the signal transmission path (302), wherein an intermodulation signal is generated in the signal transmission path (302) from the first HF signal ($u_1(t)$) and the second HF signal ($u_2(t)$) which contains a first intermodulation signal component ($u_{rPIM}(t)$) generated in an input segment (300) of the signal transmission path and a second intermodulation signal component ($u_{PIM}(t)$) generated in the measurement segment (301) of the signal transmission path,
   **characterised by** the following further steps:
   (c) generation of a compensation signal ($u_c(t)$) depending on the first intermodulation signal component ($u_{rPIM}(t)$) generated in the input segment (300);
   (d) introducing the compensation signal ($u_c(t)$) into the signal transmission path (302) in order to reduce or cancel out the first intermodulation signal component ($u_{rPIM}(t)$).

2. Method according to claim 1, **characterised in that**
(e) a reflected intermodulation signal component $u_{rx1}$ is measured (206) and from this one or more points in the measurement segment (301) of the signal transmission path are located which are defective in terms of high frequency transmission characteristics of the signal transmission path (302).

3. Method according to one of the preceding claims, **characterised in that** the first and/or the second HF signal are amplified (203), added (204) and then introduced into the signal transmission path (302).

4. Method according to one of the preceding claims, **characterised in that** at least a part of the first intermodulation signal component ($u_{rPIM}(t)$) is separated from the second intermodulation signal component ($u_{PIM}(t)$), preferably using a directional coupler (213) and/or a filter (215).

5. Method according to claim 4, **characterised in that** one or more variables such as a power, an amplitude, a phase or similar of the separated part is measured (214) and the compensation signal ($u_c(t)$) is generated on the basis of at least one of the measured variables (211, 212).

6. Method according to one of the preceding claims, **characterised in that** the compensation signal ($u_c(t)$) is controlled in an iterative method such that maximum compensation of the first intermodulation signal component ($u_{rPIM}(t)$) is achieved when it is introduced.

7. Method according to claims 5 and 6, **characterised in that** the compensation signal ($u_c(t)$) is generated by means of a control loop with alternating adjustment of its amplitude $a_{rPIM}$ and its phase $\Phi_{rPIM}$ such that the power of the separated part of the first intermodulation signal component ($u_{rPIM}(t)$) is minimised.

8. Method according to one of the preceding claims, **characterised in that** the compensation signal ($u_c(t)$) is preferably introduced into the signal transmission path (302) between the input segment (300) and the measurement segment (301) by means of a directional coupler (213).

9. Method according to one of the preceding claims, **characterised in that** a variable such as an amplitude, a phase and/or a time delay of the first intermodulation signal component ($u_{rPIM}(t)$) is determined by means of a time window method.

10. Method according to one of the preceding claims, **characterised in that** the first HF signal ($u_1(t)$) and the second HF signal ($u_2(t)$) are generated with predetermined different carrier frequencies $f_1$, $f_2$, wherein a preferably digital signal is modulated onto at least one of the carrier frequencies.

11. Method according to claims 9 and 10, **characterised in that** the first carrier frequency $f_1$ and/or the second carrier frequency $f_2$ are modulated such that an intermodulation signal generated from the two HF signals contains information on the points at which intermodulation signal components contained therein are generated.

12. Method according to one of the claims 9 to 11, **characterised in that** the frequency $f_1$ of the first HF signal ($u_1(t)$) is varied continuously and repeatedly over time (swept) from a predetermined initial frequency $f_{START}$ to a predetermined end frequency $f_{END}$ with a predetermined rate of change df/dt over time, and that the second HF signal ($u_2(t)$) is preferably generated with a constant predetermined frequency $f_2$.

13. Measuring device for carrying out the method according to one of the preceding claims.

14. Measuring device according to claim 13 with:

two signal sources (201, 202) for generating two HF signals,
a combiner (204) for combining the two HF signals and introducing them into a signal transmission path (302) with an input segment (300) and an adjoining measurement segment (301),
a device (205) such as a filter for decoupling an intermodulation signal component generated in the signal transmission path (302), and
a compensation unit (210) for generating a compensation signal ($u_c(t)$) depending on the component of the intermodulation signal generated in the input segment (300) of the signal transmission path (302) and for coupling the compensation signal ($u_c$(t)) into the signal transmission path (302).

15. Measuring device according to claim 14, **characterised by** a directional coupler (213), preferably arranged in the signal transmission path between the input segment (300) and the measurement segment (301), for coupling the compensation signal ($u_c$(t)) into the signal transmission path and/or for decoupling a signal component $u_{rx2}$ running in from the input segment (300).

16. Measuring device according to one of the claims 13 to 15, **characterised by** a third signal source (211) and a modulator (212) for generating the compensation signal in an iterative method such that a minimisation of the first intermodulation signal component ($u_{rPIM}$(t)) is achieved.

**Revendications**

1. Procédé de mesure d'une intermodulation passive générée dans une section de mesure (301) d'un chemin de transmission de signal (302), comprenant les étapes suivantes consistant à :

   (a) générer un premier signal RF ($u_1$(t)) ayant une réponse en fréquence prédéterminée et un second signal RF ($u_2$(t)) ayant une réponse en fréquence prédéterminée ;
   (b) amener le premier signal RF ($u_1$(t)) et le second signal RF ($u_2$(t)) au chemin de transmission de signal (302), un signal d'intermodulation étant généré dans le chemin de transmission de signal (302) à partir du premier signal RF ($u_1$(t)) et du second signal RF ($u_2$(t)), qui présente une première composante de signal d'intermodulation ($u_{rPIM}$(t)) générée dans une section d'entrée (300) du chemin de transmission de signal et une seconde composante de signal d'intermodulation ($u_{PIM}$(t)) générée dans la section de mesure (301) du chemin de transmission de signal,
   **caractérisé par** les autres étapes suivantes consistant à :
   (c) générer un signal de compensation ($u_c$(t)) en fonction de la première composante de signal d'intermodulation ($u_{rPIM}$(t)) générée dans la section d'entrée (300) ;
   (d) introduire le signal de compensation ($u_c$(t)) dans le chemin de transmission de signal (302) pour réduire ou éliminer la première composante de signal d'intermodulation ($u_{rPIM}$(t)).

2. Procédé selon la revendication 1, **caractérisé en ce que**
   (e) une composante de signal d'intermodulation rétroréfléchie $u_{rx1}$ est détectée (206) et à partir de celle-ci un ou plusieurs emplacements situés dans la section de mesure (301) du chemin de transmission de signal sont repérés, qui sont défectueux en termes de caractéristiques de transmission à haute fréquence du chemin de transmission de signal (302).

3. Procédé selon l'une des revendications précédentes, **caractérisé en ce que** le premier et/ou le second signal RF est amplifié (203), additionné (204) et ensuite introduit dans le chemin de transmission de signal (302).

4. Procédé selon l'une des revendications précédentes, **caractérisé en ce qu'**une partie au moins de la première composante de signal d'intermodulation ($u_{rPIM}$(t)) et séparée de la seconde composante de signal d'intermodulation ($u_{PIM}$(t)), de préférence en utilisant un coupleur directionnel (213) et/ou un filtre (215).

5. Procédé selon la revendication 4, **caractérisé en ce qu'**une ou plusieurs grandeurs, telles qu'une puissance, une amplitude, une phase ou similaire de la composante séparée sont mesurées (214), et le signal de compensation ($u_c$(t)) est généré (211, 212) en se basant sur l'une au moins des grandeurs mesurées.

6. Procédé selon l'une des revendications précédentes, **caractérisé en ce que** le signal de compensation ($u_c$(t)) est régulé dans un procédé itératif, de telle sorte que lors de son introduction la première composante de signal d'intermodulation ($u_{rPIM}$(t)) est compensée au maximum.

7. Procédé selon les revendications 5 et 6, **caractérisé en ce que** le signal de compensation ($u_c$(t)) est généré au moyen d'une boucle de régulation en réglant en alternance son amplitude $a_{rPIM}$ et sa phase $\phi_{rPIM}$, de telle sorte que la puissance de la partie séparée de la première composante de signal d'intermodulation ($u_{rPIM}$(t)) est respectivement minimisée.

8. Procédé selon l'une des revendications précédentes, **caractérisé en ce que** le signal de compensation ($u_c$(t)) est introduit dans le chemin de transmission de signal (302) entre la section d'entrée (300) et la section de mesure (301), de préférence au moyen d'un coupleur directionnel (213).

9. Procédé selon l'une des revendications précédentes, **caractérisé en ce qu'**une grandeur, telle qu'une amplitude, une phase et/ou un retard temporel de la première composante de signal d'intermodulation ($u_{rPIM}(t)$) est déterminée au moyen d'une méthode à fenêtre de temps.

10. Procédé selon l'une des revendications précédentes, **caractérisé en ce que** le premier signal RF ($u_1(t)$) et le second signal RF ($u_2(t)$) sont générés à des fréquences porteuses différentes prédéterminées $f_1$, $f_2$, un signal de préférence numérique étant modulé sur l'une au moins des fréquences porteuses.

11. Procédé selon les revendications 9 et 10, **caractérisé en ce que** la première fréquence porteuse $f_1$ et/ou la seconde fréquence porteuse $f_2$ sont modulées de telle sorte qu'un signal d'intermodulation généré des deux signaux RF inclut une information sur des endroits de génération des composantes de signal d'intermodulation qui y sont contenues.

12. Procédé selon l'une des revendications 9 à 11, **caractérisé en ce que** la fréquence $f_1$ du premier signal RF ($u_1(t)$) est variée de façon répétée en continu dans le temps (sweep) à un taux de variation prédéterminée df/dt sur le temps depuis une fréquence initiale prédéterminée $f_{DÉBUT}$ jusqu'à une fréquence finale prédéterminée $f_{FIN}$, et **en ce que** le second signal RF ($u_2(t)$) est généré de préférence à une fréquence constante prédéterminée $f_2$.

13. Appareil de mesure pour mettre en oeuvre le procédé selon l'une des revendications précédentes.

14. Appareil de mesure selon la revendication 13, comportant :

    deux sources de signal (201, 202) pour générer deux signaux RF,
    un combineur (204) pour regrouper les deux signaux RF et pour les introduire dans le chemin de transmission de signal (302) comportant une section d'entrée (300) et une section de mesure (301) qui s'y raccorde,
    un dispositif (205), tel qu'un filtre pour découpler un signal d'intermodulation généré dans le chemin de transmission de signal (302), et
    une unité de compensation (210) pour générer un signal de compensation ($u_c(t)$) en fonction de la composante du signal d'intermodulation générée dans la section d'entrée (300) du chemin de transmission de signal (302) et pour coupler le signal de compensation ($u_c(t)$) dans le chemin de transmission de signal (302).

15. Appareil de mesure selon la revendication 14, **caractérisé par** un coupleur directionnel (213) agencé de préférence entre la section d'entrée (300) et la section de mesure (301) dans le chemin de transmission de signal, pour coupler le signal de compensation ($u_c(t)$) dans le chemin de transmission de signal et/ou pour découpler une composante de signal $u_{rx2}$ entrant depuis la section d'entrée (300).

16. Appareil de mesure selon l'une des revendications 13 à 15, **caractérisé par** une troisième source de signal (211) et un modulateur (212) pour générer le signal de compensation dans un procédé itératif, de telle sorte qu'il en résulte une minimisation de la composante de signal d'intermodulation ($u_{rPIM}(t)$).

**Fig. 1**

**Fig. 2 (Stand der Technik)**

**Fig. 3**

**Fig. 4**

a)

b)

**Fig. 5**

**Fig. 6**

**Fig. 7**

**Fig. 8**

Fig. 9

**IN DER BESCHREIBUNG AUFGEFÜHRTE DOKUMENTE**

**In der Beschreibung aufgeführte Patentdokumente**

- DE 102010015102 A1
- DE 102014007151
- DE 102012023448 A1